# EUROPEAN PATENT APPLICATION

(11) **EP 4 791 080 A1**
(43) Date of publication of application: **12.08.2026**
(21) Application number: 24881707.4
(22) Date of filing: 24.10.2024
(51) Int. Cl.: H04W 36/00

(54) **COMMUNICATION METHOD AND APPARATUS**

(30) Priority: 27.10.2023 CN 202311418907
(71) Applicant: HUAWEI TECHNOLOGIES CO., LTD., Shenzhen 518129 (CN)
(72) Inventor: LI, Jie, Shenzhen, Guangdong 518129 (CN); PENG, Wenjie, Shenzhen, Guangdong 518129 (CN); GU, Zhifang, Shenzhen, Guangdong 518129 (CN)
(74) Representative: Isarpatent
(86) International application number: PCT/CN2024/127148
(87) International publication number: WO 2025/087346

(57) **Abstract**

A communication method and apparatus are provided, pertaining to the field of communication technologies, to reduce measurement overhead and improve measurement efficiency for a terminal device. A network device sends a candidate cell list and first indication information to the terminal device, where the first indication information indicates a range within which the terminal device performs measurement on a candidate cell in the candidate cell list. Therefore, the terminal device performs measurement only on a candidate cell in a first range, thereby reducing a quantity of cells to be measured, lowering measurement overhead, and improving measurement efficiency.

## Description

### CROSS-REFERENCE TO RELATED APPLICATIONS

This application claims priority to Chinese Patent Application No. 202311418907.5, filed with the China National Intellectual Property Administration on October 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Cell handover is a very important feature in a communication system, and is mainly triggered when a terminal device in a radio resource control (radio resource control, RRC) connected state moves, ensuring the terminal device is switched to a neighboring cell with better signal quality before signal quality of a serving cell becomes too poor to maintain communication. This ensures continuous and uninterrupted communication.

In layer 1/layer 2 triggered mobility (L1/L2 triggered mobility, LTM), after a network configures a candidate cell list for a terminal device, the terminal device performs measurement on all cells, which results in low efficiency.

### SUMMARY

Embodiments of this application provide a communication method and apparatus to improve cell measurement efficiency.

According to a first aspect, an embodiment of this application provides a communication method. The method is applied to a terminal device, and may be performed by the terminal device or a module (for example, a chip or a circuit) in the terminal device. For example, the method is performed by the terminal device. In the method, the terminal device receives a candidate cell list and first indication information from a first network device, where the first indication information indicates a first range, and the first range is a range within which measurement is performed on a candidate cell in the candidate cell list; and performs measurement on a candidate cell in the first range.

In the foregoing manner, after receiving the first indication information, the terminal device may determine the first range of measurement, and perform measurement only on a candidate cell in the first range, without performing measurement on all cells. This reduces measurement overheads of the terminal device, improves measurement efficiency, and improves handover efficiency.

In a possible design, the first network device may send only the candidate cell list to the terminal device, where the candidate cell list includes a candidate cell in the first range. After receiving the candidate cell list, the terminal device measures a candidate cell in the candidate cell list, that is, measures a candidate cell in the first range.

In a possible design, the method further includes: sending a movement path of the terminal device to the first network device, where the movement path of the terminal device may be used to determine the first range.

In a possible design, the first range may be a location range. That the first indication information indicates the first range includes: The first indication information indicates a start location and an end location that correspond to the first range; or the first indication information indicates a start location corresponding to the first range.

In a possible design, when the first indication information indicates the start location corresponding to the first range, the end location may be a location at which the movement path is updated, or may be a movement end point of the movement path, or the like. Alternatively, the end location may be a location at which a cell switch instruction is received.

According to the foregoing method, the terminal device obtains the start location and the end location of measurement, so that measurement does not need to be performed on the candidate cell list at a location outside the interval, thereby reducing measurement overheads of the terminal device.

In a possible design, the start location is: a waypoint at which the terminal device starts the measurement; a geographical location at which the terminal device starts the measurement; or a location whose distance from a first location is less than or equal to a first distance threshold.

In a possible design, the end location is: a waypoint at which the terminal device ends the measurement; a geographical location at which the terminal device ends the measurement; or a location whose distance from a second location is greater than or equal to a second distance threshold. For example, a way point or a geographical location may be used as the second location. For example, longitude and latitude coordinates, a geographical identifier, or the like may be used as the geographical location.

In a possible design, the first range may be a time range. That the first indication information indicates the first range includes: The first indication information indicates a start time and an end time that correspond to the first range; or the first indication information indicates a start time corresponding to the first range. Coordinated universal time (UTC) may be used as the start time and the end time. The UTC may also be referred to as universal time, universal standard time, or international coordinated time.

In a possible design, the start time is: a moment at which the terminal device starts the measurement; or a moment at whose time difference from a first moment is less than or equal to a first time threshold.

In a possible design, the end time is: a moment at which the terminal device ends the measurement; or a moment whose time difference from a second moment is greater than or equal to a second time threshold.

In a possible design, the first range may be a location range and a time range. The first indication information indicates a first range, and the first indication information indicates a start location, a start time, an end time, and an end location that correspond to the first range; the first indication information indicates a start location and a start time that correspond to the first range; the first indication information indicates a start location, a start time, and an end location that correspond to the first range; or the first indication information indicates a start time, a start location, and an end time that correspond to the first range.

In a possible design, the method further includes: The terminal device receives second indication information from the first network device, where the second indication information indicates a trigger point (or an occasion) for deleting configuration information of at least one second candidate cell, and the second candidate cell is a candidate cell in the candidate cell list.

In a possible case, a quantity of the at least one second candidate cell may be a quantity of all candidate cells in the candidate cell list, that is, the at least one second candidate cell includes N second candidate cells, the candidate cell list also includes N candidate cells, and the N second candidate cells are the same as the N candidate cells in the candidate cell list. In this case, it may be understood that the second indication information indicates to delete configuration information of all candidate cells in the candidate cell list.

In another possible case, a quantity of the at least one second candidate cell is a quantity of all candidate cells in the candidate cell list that correspond to the first range. For example, the at least one second candidate cell includes N second candidate cells. The candidate cell list includes M candidate cells. M and N are both positive integers, and M is greater than N. A quantity of candidate cells in the first range that are measured by the terminal device is N. The N second candidate cells are the same as the N candidate cells in the candidate cell list that are in the first range. In this case, it may be understood that the second indication information indicates to delete configuration information of a candidate cell in the first range in the candidate cell list.

In some embodiments, the second indication information may further indicate a second range of candidate cells that need to be deleted. The second range may be indicated in a form of a list, may be indicated in a form of a set, or may be indicated in another manner. This is not limited in this embodiment of this application. The second range may be all candidate cells included in a candidate cell list on which measurement has been completed, or may be a part of candidate cells included in a candidate cell list on which measurement has been completed.

In a possible design, that the second indication information indicates the trigger point for deleting the configuration information of the at least one second candidate cell includes: The second indication information indicates a location for deleting the configuration information of the at least one second candidate cell; or the second indication information indicates a time for deleting the configuration information of the at least one second candidate cell.

In a possible design, the location for deleting the configuration information of the at least one second candidate cell is: a first waypoint at which the configuration information of the at least one second candidate cell is deleted; a first geographical location at which the configuration information of the at least one second candidate cell is deleted; a location between a second waypoint and a third waypoint; a location between a second geographical location and a third geographical location; or a location between a fourth geographical location and a fourth waypoint, where the fourth geographical location is a location whose distance from the fourth waypoint is less than a third distance threshold.

In a possible design, that the second indication information indicates the trigger point for deleting the configuration information of the at least one second candidate cell includes: The second indication information indicates a time range for deleting the configuration information of the at least one second candidate cell; or the second indication information indicates a moment for deleting the configuration information of the at least one second candidate cell.

In a possible design, after handover to a target cell is completed, when it is determined, based on the movement path of the terminal device, that a second path through which the terminal device passes after the terminal device flies away from a first path corresponding to the first range includes a part or all of candidate cells corresponding to the first range, configuration information of the part or all of the candidate cells in the candidate cell list that correspond to the first range may be retained.

In a possible design, after handover to a target cell is completed, when it is determined, based on the movement path of the terminal device, that a second path through which the terminal device passes after the terminal device flies away from a first path corresponding to the first range does not include a part or all of candidate cells corresponding to the first range, configuration information of the part or all of the candidate cells in the candidate cell list that correspond to the first range may be deleted.

In a possible design, after handover to a target cell is completed, when it is determined, based on the movement path of the terminal device, that a second path through which the terminal device passes after the terminal device flies away from a first path corresponding to the first range includes a second range, and a shortest distance between the second range and the first range is less than or equal to a specified threshold, configuration information of a part or all of candidate cells in the candidate cell list that correspond to the first range continues to be stored.

In a possible design, third indication information may be sent to the first network device, where the third indication information indicates that a part or all of cells in the candidate cell list have been deleted.

In a possible design, if the terminal device enters a second path from a first path corresponding to the first range, and has applied configuration information of a cell measured on the second path, the terminal device may clear a stored measurement result of the cell.

In a possible design, if the terminal device enters a second path from a first path corresponding to the first range, and has applied configuration information of a cell measured on the second path, the terminal device may store only a measurement result of an overlapping cell. The overlapping cell is a cell included in a candidate cell list corresponding to the first path and included in a candidate cell list corresponding to the second path.

In a possible design, the first range may be an altitude range. That the first indication information indicates the first range includes: The first indication information indicates a start altitude and an end altitude that correspond to the first range; the first indication information indicates an end altitude corresponding to the first range; or the first indication information indicates a start altitude corresponding to the first range.

In a possible design, the first range may be an altitude range and a location. That the first indication information indicates the first range includes: The first indication information indicates a start altitude, an end altitude, and a location that correspond to the first range; the first indication information indicates an end altitude and a location that correspond to the first range; or the first indication information indicates a start altitude and a location that correspond to the first range.

In a possible design, the receiving the candidate cell list and the first indication information from the first network device includes: receiving first configuration information from the first network device, where the first configuration information includes the candidate cell list and the first indication information.

In a possible design, fourth indication information is received from the first network device, where the fourth indication information indicates the terminal device to use same configuration information (use the first configuration information) in an ascent phase and a descent phase.

In a possible design, fifth indication information is received from the first network device, where the fifth indication information indicates the terminal device to use different configuration information in an ascent phase and a descent phase. Second configuration information is received from the first network device, where the second configuration information includes sixth indication information and a second candidate cell list.

According to a second aspect, an embodiment of this application provides a communication method, applied to a first network device. The method may be performed by the first network device or a module (for example, a chip or a circuit) in the first network device. For example, the method is performed by the first network device. The method includes: The first network device determines a candidate cell list and first indication information, where the first indication information indicates a first range, and the first range is a range within which a terminal device performs measurement on a candidate cell in the first candidate cell list; and sends the candidate cell list and the first indication information to the terminal device.

In a possible design, the first network device may send only the candidate cell list to the terminal device, where the candidate cell list includes a candidate cell in the first range. After receiving the candidate cell list, the terminal device measures a candidate cell in the candidate cell list, that is, measures a candidate cell in the first range.

In a possible design, the method further includes: The first network device receives a movement path from the terminal device, where the movement path of the terminal device may be used to determine the first range.

In a possible design, the first range may be a location range. That the first indication information indicates the first range includes: The first indication information indicates a start location and an end location that correspond to the first range; or the first indication information indicates a start location corresponding to the first range.

In a possible design, when the first indication information indicates the start location corresponding to the first range, the end location may be a location at which the movement path is updated, or may be a movement end point of the movement path, or the like. Alternatively, the end location may be a location at which a cell switch instruction is received.

According to the foregoing method, the terminal device obtains the start location and the end location of measurement, so that measurement does not need to be performed on the candidate cell list at a location outside the interval, thereby reducing measurement overheads of the terminal device.

In a possible design, the start location is: a waypoint at which the terminal device starts the measurement; a geographical location at which the terminal device starts the measurement; or a location whose distance from a first location is less than or equal to a first distance threshold.

In a possible design, the end location is: a waypoint at which the terminal device ends the measurement; a geographical location at which the terminal device ends the measurement; or a location whose distance from a second location is greater than or equal to a second distance threshold. For example, a way point or a geographical location may be used as the second location. For example, longitude and latitude coordinates, a geographical identifier, or the like may be used as the geographical location.

In a possible design, the first range may be a time range. That the first indication information indicates the first range includes: The first indication information indicates a start time and an end time that correspond to the first range; or the first indication information indicates a start time corresponding to the first range. Coordinated universal time (UTC) may be used as the start time and the end time. The UTC may also be referred to as universal time, universal standard time, or international coordinated time.

In a possible design, the start time is: a moment at which the terminal device starts the measurement; or a moment at whose time difference from a first moment is less than or equal to a first time threshold.

In a possible design, the end time is: a moment at which the terminal device ends the measurement; or a moment whose time difference from a second moment is greater than or equal to a second time threshold.

In a possible design, the first range may be a location range and a time range. The first indication information indicates a first range, and the first indication information indicates a start location, a start time, an end time, and an end location that correspond to the first range; the first indication information indicates a start location and a start time that correspond to the first range; the first indication information indicates a start location, a start time, and an end location that correspond to the first range; or the first indication information indicates a start time, a start location, and an end time that correspond to the first range.

In a possible design, the method further includes: The terminal device receives second indication information from the first network device, where the second indication information indicates a trigger point (or an occasion) for deleting configuration information of at least one second candidate cell, and the second candidate cell is a candidate cell in the candidate cell list.

In a possible design, that the second indication information indicates the trigger point for deleting the configuration information of the at least one second candidate cell includes: The second indication information indicates a location for deleting the configuration information of the at least one second candidate cell; or the second indication information indicates a time for deleting the configuration information of the at least one second candidate cell.

In a possible design, the location for deleting the configuration information of the at least one second candidate cell is: a first waypoint at which the configuration information of the at least one second candidate cell is deleted; a first geographical location at which the configuration information of the at least one second candidate cell is deleted; a location between a second waypoint and a third waypoint; a location between a second geographical location and a third geographical location; or a location between a fourth geographical location and a fourth waypoint, where the fourth geographical location is a location whose distance from the fourth waypoint is less than a third distance threshold.

In a possible design, that the second indication information indicates the trigger point for deleting the configuration information of the at least one second candidate cell includes: The second indication information indicates a time range for deleting the configuration information of the at least one second candidate cell; or the second indication information indicates a moment for deleting the configuration information of the at least one second candidate cell.

In a possible design, third indication information is received from the terminal device, where the third indication information indicates that configuration information of a part or all of cells in the candidate cell list has been deleted.

In a possible design, the first range may be an altitude range. That the first indication information indicates the first range includes: The first indication information indicates a start altitude and an end altitude that correspond to the first range; the first indication information indicates an end altitude corresponding to the first range; or the first indication information indicates a start altitude corresponding to the first range.

In a possible design, the first range may be an altitude range and a location. That the first indication information indicates the first range includes: The first indication information indicates a start altitude, an end altitude, and a location that correspond to the first range; the first indication information indicates an end altitude and a location that correspond to the first range; or the first indication information indicates a start altitude and a location that correspond to the first range.

In a possible design, sending the candidate cell list and the first indication information includes: sending first configuration information, where the first configuration information includes the candidate cell list and the first indication information.

In a possible design, fourth indication information is sent, where the fourth indication information indicates the terminal device to use same configuration information (use the first configuration information) in an ascent phase and a descent phase.

In a possible design, fifth indication information is sent, where the fifth indication information indicates the terminal device to use different configuration information in an ascent phase and a descent phase. Second configuration information is sent, where the second configuration information includes sixth indication information and a second candidate cell list.

In a possible design, the method further includes: sending the movement path of the terminal device to a second network device; and receiving a cell list from the second network device, where the cell list includes an identifier of at least one cell through which the movement path passes. The second network device may be a to-be-switched candidate network device.

In a possible design, the method further includes: sending the movement path of the terminal device to a second network device; sending first information to the second network device, where the first information indicates at least one cell; and receiving second information from the second network device, where the second information indicates whether the movement path passes through the at least one cell. For example, the at least one cell may be a cell that belongs to the second network device.

According to a third aspect, an embodiment of this application provides a communication method, applied to a first network device and including: sending a movement path of a terminal device to a second network device, where the first network device is a network device that provides a service for the terminal device, and the second network device is a to-be-switched candidate network device; and receiving eighth indication information sent by the second network device, where the eighth indication information indicates an occasion (or a trigger point) for sending a preamble by the terminal device.

In a possible design, that the eighth indication information indicates the occasion for sending the preamble by the terminal device includes: The eighth indication information indicates a location for sending the preamble by the terminal device; or the eighth indication information indicates a time for sending the preamble by the terminal device.

In a possible design, the location for sending the preamble by the terminal device is: a waypoint at which the terminal device sends the preamble; a fifth geographical location at which the terminal device sends the preamble; a location between a fifth waypoint and a sixth waypoint; a location between a sixth geographical location and a seventh geographical location; or a location whose distance from a third location is less than or equal to a fourth distance threshold.

In a possible design, the time for sending the preamble by the terminal device is: a moment at which the terminal device sends the preamble; a moment between a third moment and a fourth moment; or a moment whose time difference from a fifth moment is less than or equal to a third time threshold.

In a possible design, the method further includes:
sending the eighth indication information to the terminal device; or
determining, based on the eighth indication information, an occasion for sending a PDCCH order, and sending the PDCCH order to the terminal device based on the occasion of the PDCCH order, where the PDCCH order indicates the terminal device to send a preamble.

According to a fourth aspect, an embodiment of this application provides a communication method, applied to a second network device and including: receiving a movement path of a terminal device from a first network device, where the first network device is a network device that provides a service for the terminal device, and the second network device is a to-be-switched candidate network device; and sending eighth indication information to the first network device, where the eighth indication information indicates an occasion (or a trigger point) for sending a preamble by the terminal device.

In a possible design, that the eighth indication information indicates the occasion for sending the preamble by the terminal device includes: The eighth indication information indicates a location for sending the preamble by the terminal device; or the eighth indication information indicates a time for sending the preamble by the terminal device.

In a possible design, the location for sending the preamble by the terminal device is: a waypoint at which the terminal device sends the preamble; a fifth geographical location at which the terminal device sends the preamble; a location between a fifth waypoint and a sixth waypoint; a location between a sixth geographical location and a seventh geographical location; or a location whose distance from a third location is less than or equal to a fourth distance threshold.

In a possible design, the time for sending the preamble by the terminal device is: a moment at which the terminal device sends the preamble; a moment between a third moment and a fourth moment; or a moment whose time difference from a fifth moment is less than or equal to a third time threshold.

According to a fifth aspect, this application provides a communication apparatus. The communication apparatus has functions for implementing the first aspect to the fourth aspect. For example, the communication apparatus includes a corresponding module, unit, or means for performing an operation in the first aspect to the fourth aspect. The function, the unit, or the means may be implemented by software, may be implemented by hardware, or may be implemented by hardware executing corresponding software.

In a possible design, the communication apparatus includes a processing unit and a communication unit. The communication unit may be configured to: receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the fourth aspect.

In a possible design, the communication apparatus includes a processor, and the processor may be configured to be coupled to a memory. The memory may store a necessary computer program or necessary instructions for implementing the functions in the first aspect to the third aspect. The processor may execute the computer program or the instructions stored in the memory. When the computer program is executed or the instructions are executed, the communication apparatus is caused to implement the method in any possible design or implementation in the first aspect to the fourth aspect.

In a possible design, the communication apparatus includes a processor and a memory, and the memory may store a necessary computer program or necessary instructions for implementing functions in the first aspect to the fourth aspect. The processor may execute the computer program or the instructions stored in the memory. When the computer program is executed or the instructions are executed, the communication apparatus is caused to implement the method in any possible design or implementation in the first aspect to the fourth aspect.

In a possible design, the communication apparatus includes a processor and an interface circuit. The processor is configured to: communicate with another apparatus through the interface circuit, and perform the method in any possible design or implementation in the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, this application provides a communication system. The communication system may include a first communication apparatus and a second communication apparatus. The first communication apparatus is configured to perform the method according to the first aspect, and the second communication apparatus is configured to perform the method according to the second aspect.

According to a seventh aspect, this application provides a communication system. The communication system may include a first communication apparatus and a second communication apparatus. The first communication apparatus is configured to perform the method according to the third aspect, and the second communication apparatus is configured to perform the method according to the fourth aspect.

According to an eighth aspect, this application provides a computer-readable storage medium. The computer-readable storage medium stores computer-readable instructions. When a computer reads and executes the computer-readable instructions, the computer is caused to perform the method in any one of the possible designs of the first aspect to the fourth aspect.

According to a ninth aspect, this application provides a computer program product. When a computer reads and executes the computer program product, the computer is caused to perform the method in any one of the possible designs of the first aspect to the fourth aspect.

According to a tenth aspect, this application provides a chip. The chip includes a processor. The processor is coupled to a memory, and is configured to: read and execute a software program stored in the memory, to perform the method in any one of the possible designs of the first aspect to the fourth aspect.

In this application, based on the implementations provided in the foregoing aspects, the implementations may be further combined to provide more implementations.

### BRIEF DESCRIPTION OF DRAWINGS

FIG. 1 is a diagram of a communication system to which an embodiment of this application is applicable;
FIG. 2A is a diagram of another communication system according to an embodiment of this application;
FIG. 2B is a diagram of another communication system according to an embodiment of this application;
FIG. 3 is a diagram of a flight path of an uncrewed aerial vehicle according to an embodiment of this application;
FIG. 4 is a schematic flowchart of a network switch method according to an embodiment of this application;
FIG. 5 is a schematic flowchart of another network switch method according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of a communication apparatus 1000 according to an embodiment of this application; and
FIG. 11 is a diagram of a structure of a communication apparatus 1100 according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network, (wireless local area network, WLAN), a wireless fidelity (wireless fidelity, Wi-Fi) system, a 4th generation (4th generation, 4G) mobile communication system such as a long term evolution (long term evolution, LTE) system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design solution described as an "example" in this application should not be explained as being more preferred or having more advantages than another embodiment or design solution. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

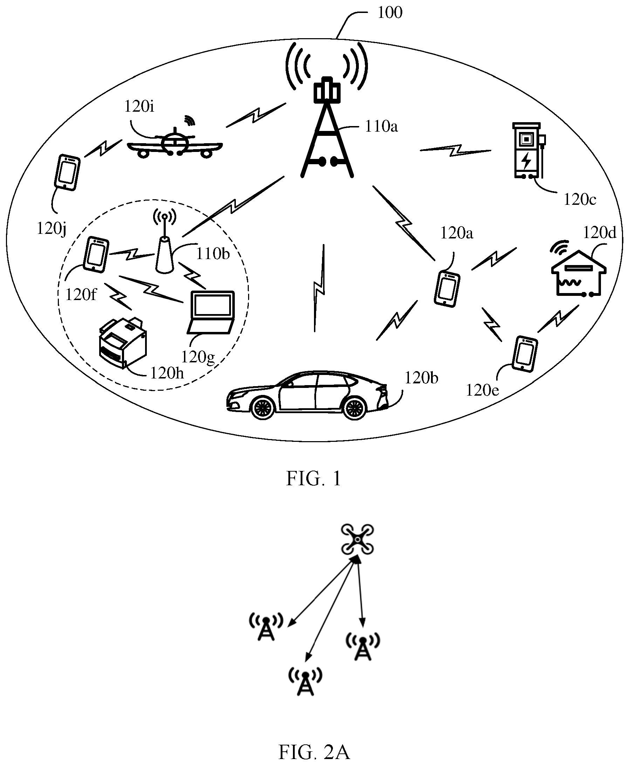

FIG. 1 is a diagram of an architecture of a communication system to which an embodiment of this application is applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. The terminal apparatuses may be connected to each other in a wired or wireless manner, and the network devices may be connected to each other in a wired or wireless manner. FIG. 1 is merely a diagram. The communication system may further include another network device, for example, may further include a wireless relay device and a wireless backhaul device, which are not shown in FIG. 1.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), or may be a micro base station or an indoor base station (for example, 110b in FIG. 1), or may be a relay node, a donor node, or the like. A specific technology and a specific device form that are used by the network device are not limited in embodiments of this application. In embodiments of this application, an example in which the network device is a base station is used for description.

In another possible scenario, a plurality of RAN nodes coordinate to assist the terminal in implementing radio access, and different RAN nodes separately implement some functions of a base station. For example, the RAN node may be a CU, a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of the software module and the hardware module. Optionally, in a secure communication method provided in this embodiment of this application, operations of updating a random seed and performing security processing on data may be performed by the RU, and sending and receiving operations may be performed by the DU.

The terminal device is a user-side device having a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, a smart grid, smart furniture, smart office, a smart wearable device, smart transportation, and a smart city. The terminal apparatus may be a mobile phone, a tablet computer, a computer with a wireless transceiver function, a wearable device, a vehicle, an uncrewed aerial vehicle, a helicopter, an airplane, a ship, a robot, or the like. A specific technology and a specific apparatus form that are used by the terminal device are not limited in embodiments of this application. The terminal device in embodiments of this application may be a movable device.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as smart grid, industrial control, smart transportation, and smart city. A function of the terminal device may also be performed by a module (for example, a chip or a modem) in the terminal device, or may be performed by an apparatus including a function of the terminal device.

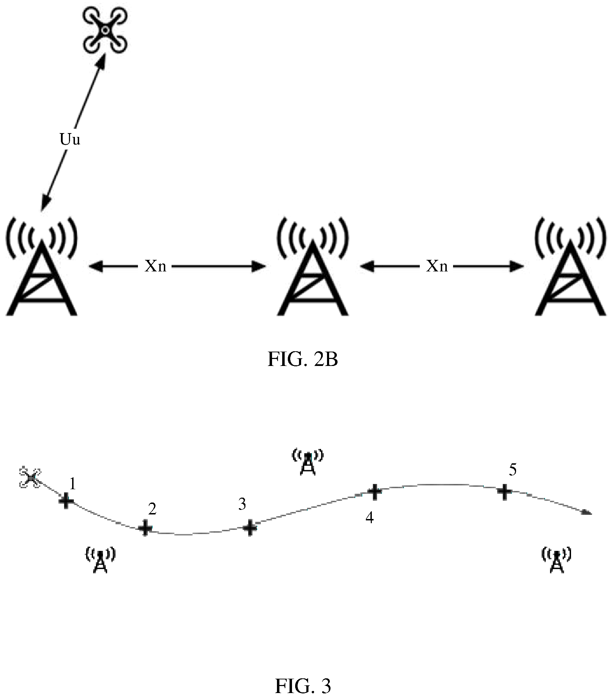

For example, the movable terminal device is an uncrewed aerial vehicle. As a new type of aircraft, an uncrewed aerial vehicle (uncrewed aerial vehicle, UAV) is becoming increasingly common nowadays because the uncrewed aerial vehicle is flexible and convenient. In addition, a cellular network can provide the uncrewed aerial vehicle with support for important characteristics such as wide coverage, high reliability, high security, and continuous mobility, and provide a regulator with regulatory capabilities. A communication environment of the uncrewed aerial vehicle is greatly different from that of a common terminal. The uncrewed aerial vehicle mainly flies above a network device, is connected to the network device through a Uu interface, and mainly performs line-of-sight (line-of-sight, LOS) communication. Therefore, the uncrewed aerial vehicle can receive signals from more network devices, as shown in FIG. 2A. The network devices may be connected through an Xn interface, to implement signaling exchange. From a logical perspective, the Xn interface is a point-to-point interface between two network devices. Even if there is no physical direct connection between the two network devices, signaling exchange may be implemented through the point-to-point interface, as shown in FIG. 2B.

When executing corresponding tasks, for example, performing power network inspection, the uncrewed aerial vehicle may fly along a fixed route. The route may be referred to as a flight path of the uncrewed aerial vehicle, as shown in FIG. 3. The flight path includes at least one piece of waypoint information. A 1^{st} piece of waypoint information in the flight path may include location information corresponding to a take-off point of the uncrewed aerial vehicle and a current time point, or include information about a location through which the uncrewed aerial vehicle is to fly in a future time period and a time point corresponding to arrival at the location. Waypoint information other than the 1^{st} waypoint information in the flight path may include information about a location through which the uncrewed aerial vehicle is to fly in a future time period and a time point corresponding to arrival at the location information. Each waypoint information may further include the sequence number of the waypoint information in the flight path. For example, the 1^{st} waypoint information in the flight path includes the sequence number 1. It should be understood that the location information may be location information in a longitude and latitude coordinate system, or may be location information in a city coordinate system, or may be location information in a rectangular coordinate system, or the like. This is not limited herein. An example in which each piece of waypoint information in the flight path is information about a location through which the uncrewed aerial vehicle is to fly in a future time period and a time point corresponding to arrival at the location information is used for description. For example, a flight path determined by the uncrewed aerial vehicle is Shanghai (10:00:00)-Suzhou (12:00:00)-Beijing (16:00:00), and the flight path includes three pieces of waypoint information. An example in which a 1^{st} piece of waypoint information is Shanghai (10:00:00) is used for specific description. The uncrewed aerial vehicle is to arrive in Shanghai at 10:00:00. Understanding of a 2^{nd} piece of waypoint information and a 3^{rd} piece of waypoint information is similar to understanding of the 1^{st} piece of waypoint information. Details are not described below.

The following uses an example in which a network device (namely, a gNB) in an NR network is a network device and an uncrewed aerial vehicle is a terminal device for description. The same is true for a network device such as an eNodeB in a 4G network or another device in a 6G network. This is not limited in this application. The NR protocol supports reporting of a flight path of the uncrewed aerial vehicle. Currently, it is specified in the NR protocol that a maximum quantity of waypoints in the flight path is 20. In addition, the standard further supports updating of the flight path of the uncrewed aerial vehicle. For example, when the flight path of the uncrewed aerial vehicle changes, the uncrewed aerial vehicle may first send flight path update indication information to the network device, to notify the network device that the flight path is updated. If the network device needs to update the flight path, the network device may send a flight path request message to the uncrewed aerial vehicle, to request the uncrewed aerial vehicle to send the flight path to the network device.

When flying, the uncrewed aerial vehicle passes through coverage areas of different network devices. In this case, in the coverage areas of the different network devices, the uncrewed aerial vehicle needs to communicate with the different network devices. The uncrewed aerial vehicle currently flies within a coverage area of a source network device. The uncrewed aerial vehicle communicates with the source network device, and uploads a flight path of the uncrewed aerial vehicle to the source network device. The source network device performs network configuration based on the flight path. When the uncrewed aerial vehicle flies out of the coverage area of the source network device and flies into a coverage area of a target network device, a network device connected to the uncrewed aerial vehicle switches from the source network device to the target network device, and the uncrewed aerial vehicle communicates with the target network device.

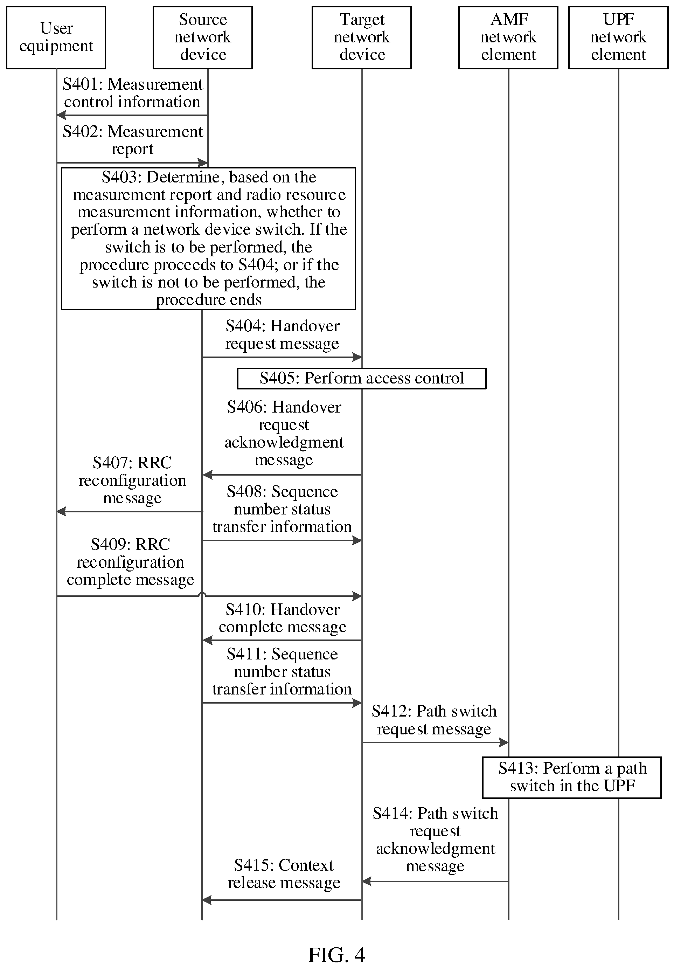

Specifically, a network device switch process is shown in FIG. 4. A network device switch method is performed by user equipment UE, a source network device, a target network device, an AMF network element, and a UPF network element through interaction, and may include the following steps.

Before the handover is completed, the user equipment exchanges user data with the UPF via the source network device.

S401: The source network device sends measurement control information to the user equipment.

In this embodiment of this application, the measurement control information is determined by the source network device based on information such as roaming and access restriction.

After receiving the measurement control information, the user equipment generates a measurement report based on the measurement control information.

S402: The user equipment sends the measurement report to the source network device.

S403: The source network device determines, based on the measurement report and radio resource measurement (radio resource measurement, RMM) information, whether to perform a network device switch. If the switch is to be performed, the procedure proceeds to S404; or if the switch is not to be performed, the procedure ends.

S404: The source network device sends a handover request message to a target network device.

In this embodiment of this application, the handover request message includes information such as a target cell identifier (Identifier, ID).

S405: The target network device performs access control.

S406: The target network device sends a handover request acknowledgment message to the source network device.

In this embodiment of this application, the handover request acknowledgment message includes an RRC reconfiguration (radio resource control reconfiguration, RRC Reconfiguration) message that needs to be sent by the target network device to the user equipment.

After receiving the handover request acknowledgment message, the source network device obtains the RRC reconfiguration message from the handover request acknowledgment message.

S407: The source network device sends the RRC reconfiguration message to the user equipment.

In this embodiment of this application, the RRC reconfiguration message further includes information such as a target cell ID.

Optionally, if a dual activation protocol stack (dual active protocol stack, DAPS) is configured for a data radio bearer (data radio bearer) DRB of the source network device, the source network device may further send early status transfer (early status transfer) information to the target network device. The early status transfer information indicates the target network device to clear a data packet that is in stored data and that has been sent by the source network device.

S408: The source network device sends sequence number status transfer (SN status transfer) information to the target network device.

In this embodiment of this application, the sequence number status transfer information is used to notify the target network device of a packet data convergence protocol (packet data convergence protocol, PDCP) sequence number.

S409: The user equipment sends an RRC reconfiguration complete (radio resource control reconfiguration complete, RRC Reconfiguration Complete) message to the target network device.

S410: The target network device sends a handover complete message to the source network device.

S411: The source network device sends the SN status transfer information to the target network device.

S412: The target network device sends a path switch request message to the AMF network.

S413: The AMF network element performs a path switch in the UPF network element.

S414: The AMF network element sends a path switch request acknowledgment message to the target network device.

S415: The target network device sends a context release message to the source network device.

Currently, there may be two types of cell handover. One is cell switch implemented based on layer 1/layer 2, which may be referred to as layer 1/layer 2 switch or layer 1/layer 2 triggered mobility (L1/L2 triggered mobility, LTM). The other is cell handover implemented based on layer 3, which may be referred to as layer 3 handover (L3 handover). The layer 1 may be a physical layer, the layer 2 may be any one or more of a media access control (media access control, MAC) layer, a radio link control (radio link control, RLC) layer, a packet data convergence protocol (packet data convergence protocol, PDCP) layer, and a service data adaptation (service data adaptation protocol, SDAP) layer, and the layer 3 may be an RRC layer. It may be understood that layer 1/layer 2 switch may also be understood as layer 1 and/or layer 2 switch. When there is an "and" relationship, operations related to a switch process are mainly completed by the layer 1 and the layer 2 together. When there is an "or" relationship, operations related to a switch process are mainly completed by the layer 1 or the layer 2. Because the layer 1 and the layer 2 are located in a lower layer protocol stack than the RRC layer (layer 3), the layer 1/layer 2 switch may also be referred to as lower layer switch.

For the layer 3 handover, referring to FIG. 4, a source network device receives a measurement report of a terminal device, where the measurement report includes a layer 3 measurement result. The source network device may select a candidate neighboring cell, for example, the target cell in FIG. 4, based on the layer 3 measurement result. Then, the source network device sends a handover request message to a target network device to which the candidate neighboring cell belongs, that is, performs S406. Further, a subsequent operation is continued. For details, refer to FIG. 4.

For the layer 1/layer 2 switch, the source network device selects a target cell based on an L3 measurement result. The target cell may be selected by a CU of the source network device. LTM switch configuration information is delivered to the terminal device by using an RRC reconfiguration message. A difference between the layer 1/layer 2 switch and the layer 3 handover is that handover is performed on the source network device at L1/L2. Specifically, the terminal device reports an L1 measurement result to the source network device, and a DU of the source network device performs handover decision based on the L1 measurement result, and delivers a switch command to the terminal device via a MAC control element (control element, CE). After the handover is completed, the terminal device does not delete configuration information of a target cell. When the terminal device needs to switch to the target cell next time, the terminal device may directly deliver a switch command. This eliminates a handover configuration process, and can reduce a handover delay.

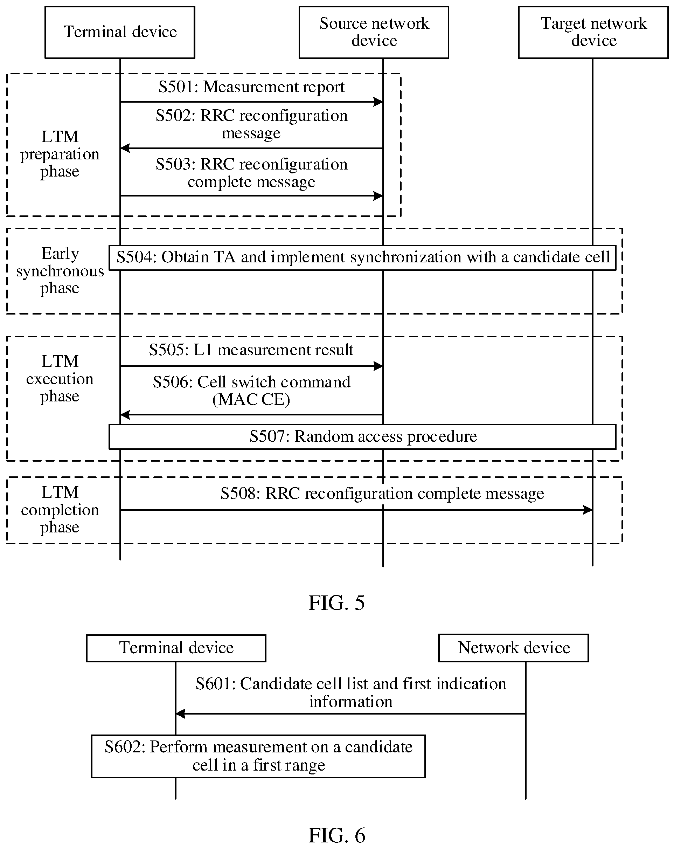

Specifically, referring to FIG. 5, a layer 1/layer 2 switch procedure may include the following steps:
LTM preparation (preparation) phase:
   S501: The terminal device sends a measurement report to the source network device. The source network device determines, based on the measurement report, to perform LTM switch, and triggers candidate cell preparation, to generate a candidate cell list. The candidate cell list may include one or more candidate cells. The measurement report may be understood as a layer 3 measurement report.
   S502: The source network device sends an RRC reconfiguration message to the terminal device, where the RRC reconfiguration message includes a configuration of each candidate cell in the candidate cell list.
   S503: The terminal device stores configuration information of the candidate cell that is delivered by the source network device, and sends an RRC reconfiguration complete message to the source network device.
Early synchronous (early synchronous) phase:
   S504: Optionally, before the source network device receives a switch command, the terminal device may obtain timing advance (timing advance, TA) in advance and implement synchronization with the candidate cell.
LTM execution (execution) phase:
   S505: The terminal device measures each configured candidate cell, and reports an L1 measurement result to the source network device.
   S506: The source network device determines, based on the L1 measurement result, whether to perform LTM switch, and if the LTM switch is to be performed, sends a cell switch command (cell switch command) to the terminal device, for example, may trigger switch execution to the terminal device through MAC CE. The MAC CE may carry an identifier configured for a target cell, and the terminal device uses a corresponding target cell configuration based on the identifier.
   S507: The terminal device determines whether a random access procedure needs to be performed, and the UE initiates the random access procedure to a target network device to which the target cell belongs.
LTM completion (completion) phase:
   S508: The UE sends an RRC reconfiguration complete message to the target cell, to indicate a handover completion indication to the target network device.

It can be learned from FIG. 5 that currently, after the network device configures the candidate cell list for the terminal device in LTM measurement, the terminal device attempts to measure all candidate cells. Consequently, efficiency is low.

With reference to the foregoing descriptions, an embodiment of this application provides a communication method. The method provided in this application may be applied to a network switch procedure in FIG. 5. A terminal device may perform the steps performed by the terminal device in FIG. 5. A network device may perform the steps performed by the source network device in FIG. 5. Specifically, referring to FIG. 6, the communication method may include the following steps.

S601: The network device sends a candidate cell list and first indication information to the terminal device, and correspondingly, the terminal device receives the candidate cell list and the first indication information.

The first indication information indicates a first range, and the first range may be a range of measuring a candidate cell in the candidate cell list.

In some embodiments, the network device may send only the candidate cell list to the terminal device, where the candidate cell list includes a candidate cell to be measured by the terminal device in the first range. For example, in this case, the first range may be a default range of the terminal device and the network device. For example, the first range may be an interval between two waypoints at which the terminal device is currently located.

In a possible implementation, the candidate cell list and the first indication information may be carried in configuration information, and the network device sends the configuration information to the terminal device. For example, the candidate cell list and the first indication information may be carried in an RRC reconfiguration message. In another possible implementation, the candidate cell list and the first indication information may also be sent separately, carried in different information, and sent by the network device to the terminal device.

It should be noted that the candidate cell list includes one or more candidate cells. If the network device configures a plurality of candidate cells for the terminal device, the network device may send the information to the terminal device in a non-list form, for example, in a set or group manner. This is not limited in this embodiment of this application.

Regarding the first range indicated by the first indication information, this embodiment of this application may include the following several possible implementations.

In a first possible implementation, the first range indicated by the first indication information may be a location or a location range. It may also be understood that a range within which the terminal device measures a candidate cell in the candidate cell list may be determined based on the location or the location range indicated by the first indication information.

Manner 1: The first indication information may indicate a location range for performing measurement on a candidate cell in the candidate cell list, and the location range may include a start location and an end location.

Manner 2: The first indication information may indicate a start location for performing measurement on a candidate cell in the candidate cell list. In some embodiments, a start location of an updated movement path or an end location of the movement path (for example, a last waypoint in the movement path) may be used as the end location. When updating the movement path, the terminal device may stop (or end) measurement on the candidate cell in the candidate cell list. In some other embodiments, a location or a moment at which a switch command is received may be used as the end location. The terminal device may stop measurement on the candidate cell list when receiving the switch command.

The start location may be a waypoint on the movement path of the terminal device, a geographical location, or a location interval. The movement path is a planned movement route of the terminal device. Optionally, a route along which an uncrewed aerial vehicle flies may be referred to as a flight path. The end location may be a waypoint on the movement path of the terminal device, a geographical location, or a location interval. For example, the location interval may be represented in a form of a location point and a distance threshold, or in another form. The location point may be a waypoint or a geographical location.

The following describes, by using an example, an implementation solution when the first indication information uses the manner 1.

Example 1-1: The start location and the end location may be represented by using a waypoint. For example, the first indication information includes a waypoint 1 and a waypoint 2, that is, (waypoint 1, waypoint 2). Therefore, the terminal device starts measurement on a candidate cell in the candidate cell list when arriving at the waypoint 1, and stops (or ends) the measurement on the candidate cell in the candidate cell list when leaving the waypoint 2.

Example 1-2: Both the start location and the end location are indicated by using a geographical location. The geographical location may be represented by longitude and latitude coordinates. For example, the first indication information includes a geographical location 1 and a geographical location 2, that is, (geographical location 1, geographical location 2). Therefore, the terminal device starts measurement on a candidate cell in the candidate cell list when arriving at the geographical location 1, and stops the measurement on the candidate cell in the candidate cell list when leaving the geographical location 2.

Example 1-3: The start location is a location interval, and the end location is a geographical location or a waypoint. Alternatively, the start location is a geographical location or a waypoint, and the end location is a location interval.

For example, the start location is a location whose distance from a first location is less than or equal to a first distance threshold, and the end location is a waypoint 2. The first indication information may include the first location, the first distance threshold, and the waypoint 2. A waypoint or a geographical location may be used as the first location. For example, the first location is a waypoint 1, so that the terminal device starts measurement on the candidate cell list at a location whose distance from the waypoint 1 is less than the first distance threshold, and may end the measurement on the candidate cell list when arriving at the waypoint 2. For example, the location whose distance from the waypoint 1 is less than the first distance threshold may be that in a process of flying to the waypoint 1, when the distance from the waypoint 1 is less than or equal to the first distance threshold, the terminal device starts measurement on the candidate cell list, and the location interval of the start location may be a range from (the waypoint 1 - the first distance threshold) to the waypoint 1. The location whose distance from the waypoint 1 is less than or equal to the first distance threshold may alternatively be that after flying away from the waypoint 1, when the distance from the waypoint 1 is less than or equal to the first distance threshold, the terminal device starts measurement on the candidate cell list, and the location interval of the start location may be a range from the waypoint 1 to (the waypoint 1 + the first distance threshold).

For another example, the start location is a waypoint 1, and the end location is a location whose distance from a second location is greater than or equal to a second distance threshold. The first indication information may include the waypoint 1, the second location, and the second distance threshold. A waypoint or a geographical location may be used as the second location. For example, the second location is a waypoint 2, so that the terminal device starts measurement on the candidate cell list when arriving at the waypoint 1, and may end the measurement on the candidate cell list at a location whose distance from the waypoint 2 is greater than or equal to the second distance threshold. For example, the location whose distance from the waypoint 2 is greater than or equal to the second distance threshold may be that in a process of flying away from the waypoint 2, when the distance from the waypoint 2 is greater than or equal to the second distance threshold, the terminal device ends the measurement on the candidate cell list.

Example 1-4: The start location is a location interval, and the end location is a location interval. The start location is a location whose distance from a first location is less than or equal to a first distance threshold, and the end location may be a location whose distance from a second location is greater than or equal to a second distance threshold. A waypoint or a geographical location may be used as the first location. A waypoint or a geographical location may be used as the second location. For example, the first location is a waypoint 1, and the second location is a waypoint 2. The first indication information may include the waypoint 1, the first distance threshold, the waypoint 2, and the second distance threshold. Therefore, the terminal device starts measurement on the candidate cell list at a location whose distance from the waypoint 1 is less than or equal to the first distance threshold, and may end the measurement on the candidate cell list at a location whose distance from the waypoint 2 is greater than or equal to the second distance threshold. In some possible scenarios, the first distance threshold and the second distance threshold are the same. The first indication information may include the waypoint 1, the first distance threshold (or the second distance threshold), and the waypoint 2. Therefore, the terminal device starts measurement on the candidate cell list at a location whose distance from the waypoint 1 is less than or equal to the first distance threshold, and may end the measurement on the candidate cell list at a location whose distance from the waypoint 2 is greater than or equal to the first distance threshold.

The following describes, by using an example, an implementation solution when the first indication information uses the manner 2.

Example 2-1: The start location may be represented by a using waypoint. For example, the first indication information includes a waypoint 1. Therefore, the terminal device starts measurement on a candidate cell in the candidate cell list when arriving at the waypoint 1. In some embodiments, the terminal device may stop (or end) the measurement on the candidate cell in the candidate cell list when flying away from a movement path. In some other embodiments, the terminal device may alternatively stop the measurement on the candidate cell list when receiving a switch command.

Example 2-2: The start location may be represented by using a geographical location. For example, the first indication information includes a geographical location 1. Therefore, the terminal device starts measurement on a candidate cell in the candidate cell list when arriving at the geographical location 1. In some embodiments, the terminal device may stop (or end) the measurement on the candidate cell in the candidate cell list when flying away from a movement path. In some other embodiments, the terminal device may alternatively stop the measurement on the candidate cell list when receiving a switch command.

Example 2-3: The start location may be represented by using a location interval. The start location is a location whose distance from the first location is less than or equal to a first distance threshold. For example, the first location is a waypoint 1, and the first indication information includes the waypoint 1 and the first distance threshold. Therefore, the terminal device starts measurement on the candidate cell list at a location whose distance from the waypoint 1 is less than the first distance threshold. In some embodiments, the terminal device may stop (or end) the measurement on the candidate cell in the candidate cell list when flying away from a movement path. In some other embodiments, the terminal device may alternatively stop the measurement on the candidate cell list when receiving a switch command.

In a second possible implementation, the first range indicated by the first indication information may be a time or a time range. It may also be understood that a range within which the terminal device measures a candidate cell in the candidate cell list may be determined based on the time or the time range indicated by the first indication information.

Manner 3: The first indication information may indicate a time range of measuring a candidate cell in the candidate cell list, where the time range may include a start time and an end time.

Manner 4: The first indication information may indicate a start time for performing measurement on a candidate cell in the candidate cell list. In some embodiments, the terminal device may stop (or end) the measurement on the candidate cell in the candidate cell list when flying away from a movement path. In some other embodiments, the terminal device may alternatively stop the measurement on the candidate cell list when receiving a switch command.

A moment or a time interval may be used as the start time. A moment or a time interval may be used as the end time.

The following describes, by using an example, an implementation solution when the first indication information uses the manner 3.

Example 3-1: The start time is a moment at which the terminal device starts measurement, and the end time is a moment at which the terminal device ends measurement. For example, the start time is a moment 1, and the end time is a moment 2. The first indication information indicates the terminal device to start measurement on the candidate cell list at the moment 1, and end the measurement on the candidate cell list at the moment 2. For example, the first indication information may include the moment 1 and the moment 2, that is, (moment 1, moment 2).

Example 3-2: The start time is a time interval, and the end time is a moment. Alternatively, the start time is a moment, and the end time is a time interval. For example, the start time is a moment whose time difference from a first moment is less than or equal to a first time threshold, and the end time is a moment 2. The first indication information indicates the terminal device to start measurement on the candidate cell list at a moment whose interval from the first moment is less than the first time threshold, and end the measurement on the candidate cell list at the moment 2. For example, the first indication information may include the first moment, the first time threshold, and the moment 2. The moment whose interval from the first moment is less than the first time threshold may be a time interval from the first moment - the first time threshold to the first moment. Alternatively, the moment whose interval from the first moment is less than the first time threshold may be a time interval from the first moment to the first moment + the first time threshold.

For another example, the start time is a moment 1 and the end time is a moment whose time difference from a second moment is greater than or equal to a second time threshold. The first indication information indicates the terminal device to start measurement on a candidate cell at the moment 1, and end the measurement on the candidate cell list at the moment whose time difference from the second moment is greater than or equal to the second time threshold. For example, the first indication information may include the moment 1, a moment 2, and the second time threshold.

Example 3-3: The start time and the end time each may be a time range. For example, the start time is a moment whose time difference from a first moment is less than or equal to a first time threshold, and the end time is a moment whose time difference from a second moment is greater than or equal to a second time threshold. The first indication information indicates the terminal device to start measurement on the candidate cell list at the moment whose interval from the first moment is less than the first time threshold, and end the measurement on the candidate cell list at the moment whose time difference from the second moment is greater than or equal to the second time threshold. For example, the first indication information may include the first moment, the first time threshold, the second moment, and the second time threshold.

The moment 1, the first moment, the moment 2, the second moment, and the like mentioned above may be an estimated arrival time of a waypoint in a flight path, or may be any moment in a time interval corresponding to the movement path.

In a third possible implementation, the first range indicated by the first indication information may be a location (range) and a time (range).

Manner 5: The first indication information may indicate a start point at which measurement is performed on a candidate cell in the candidate cell list. The start point may include a start time and a start location. For a manner used for the start time and the start location, refer to the descriptions of the manner 1 to the manner 4. Details are not described herein again. For example, the first indication information may include a waypoint 1 and a moment 1. In this case, the terminal device starts measurement on a candidate cell in the candidate cell list at the moment 1 when arriving at the waypoint 1. For another example, the first indication information may include a waypoint 1, a first distance threshold, a moment 1, and a first time threshold. The terminal device starts measurement on a candidate cell in the candidate cell at a moment whose time difference from the moment 1 is less than or equal to the first time threshold and at a location whose distance from the waypoint 1 is less than or equal to the first distance threshold.

Manner 6: The first indication information may indicate a start point and an end point at which measurement is performed on a candidate cell in the candidate cell list, where the start point may include a start time and a start location, and the end point may include an end location and an end time. For manners used for the start time and the start location, and the end time and the end location, refer to the descriptions of the manner 1 to the manner 4. Details are not described herein again. For example, the first indication information may include a waypoint 1, a moment 1, a waypoint 1, and a moment 2. In this case, the terminal device starts measurement on a candidate cell in the candidate cell list at the moment 1 when arriving at the waypoint 1, and ends the measurement on the candidate cell in the candidate cell list at the moment 2 when leaving the waypoint 2. For another example, the first indication information may include a waypoint 1, a first distance threshold, a moment 1, a first time threshold, a waypoint 1, a second distance threshold, a moment 2, and a second time threshold. The terminal device starts measurement on a candidate cell in the candidate cell at a moment whose time difference from the moment 1 is less than or equal to the first time threshold and at a location whose distance from the waypoint 1 is less than or equal to the first distance threshold. The terminal device starts measurement on a candidate cell in the candidate cell at a moment whose time difference from the moment 2 is greater than or equal to the second time threshold and at a location whose distance from the waypoint 2 is greater than or equal to the second distance threshold.

In a fourth possible implementation, the first indication information indicates an altitude range corresponding to the first range.

Manner 7: The first indication information indicates a start altitude and an end altitude that correspond to the first range. For example, the start altitude may be a minimum altitude, and the end altitude may be understood as a maximum altitude. That is, the minimum altitude and maximum altitude represent the altitude range. For another example, the start altitude and/or the end altitude may be indicated by using altitude information relative to a reference plane, for example, altitude information relative to a sea level or a ground level, or altitude information relative to a maximum flight altitude.

Manner 8: The first indication information may indicate, by indicating a start altitude or an end altitude, an altitude range for performing measurement. The start altitude or the end altitude may be indicated by using altitude information relative to a reference plane. For another example, the start altitude and the end altitude are indicated by using an altitude threshold. For example, the first indication information includes the altitude threshold. In this case, the terminal device may be indicated to end measurement when an altitude is less than the altitude threshold. In other words, an altitude range for performing measurement is from 0 to an altitude corresponding to the altitude threshold. For another example, the first indication information includes an altitude threshold. In this case, the terminal device may be indicated to start measurement when an altitude is greater than the altitude threshold. In other words, an altitude range for performing measurement may be from an altitude corresponding to the altitude threshold to a maximum flight altitude.

In a fifth possible implementation, the first indication information indicates an altitude (or an altitude range) and a location (or a location range) that correspond to the first range. Considering that an uncrewed aerial vehicle may be at different locations during ascent and descent, different candidate cell lists are configured for different locations and different altitude ranges. For example, the first indication information includes an altitude threshold and a location point. In this case, the terminal device is indicated to perform measurement on a candidate cell in the candidate cell list at a location point 1 in an altitude range less than the altitude threshold. For another example, the first indication information includes an altitude threshold and a location range. In this case, the terminal device is indicated to perform measurement on a candidate cell in the candidate cell list in the location range and an altitude range less than the altitude threshold. The location range may be a coverage area of a cell, or may be represented by using two location points. The location point may be longitude and latitude coordinates. The location range may be represented by using a waypoint and a distance threshold.

S602: The terminal device performs measurement on a candidate cell in the first range.

In a first possible application scenario, the first possible implementation to the third possible implementation are applicable to a terminal device that is not an uncrewed aerial vehicle (or that is not an aircraft), and also applicable to a non-takeoff phase and a non-landing phase of an uncrewed aerial vehicle (or an aircraft).

In a second possible application scenario, the fourth possible implementation and the fifth possible implementation are applicable to a take-off phase or a landing phase of an uncrewed aerial vehicle (or an aircraft). Certainly, when the uncrewed aerial vehicle (or the aircraft) corresponds to different flight altitudes (or altitude ranges) at different locations on a flight path, the fourth possible implementation and the fifth possible implementation are also applicable to a non-takeoff phase or a non-landing phase of the uncrewed aerial vehicle (or the aircraft).

The following first describes, in the first possible application scenario, the solutions provided in embodiments of this application.

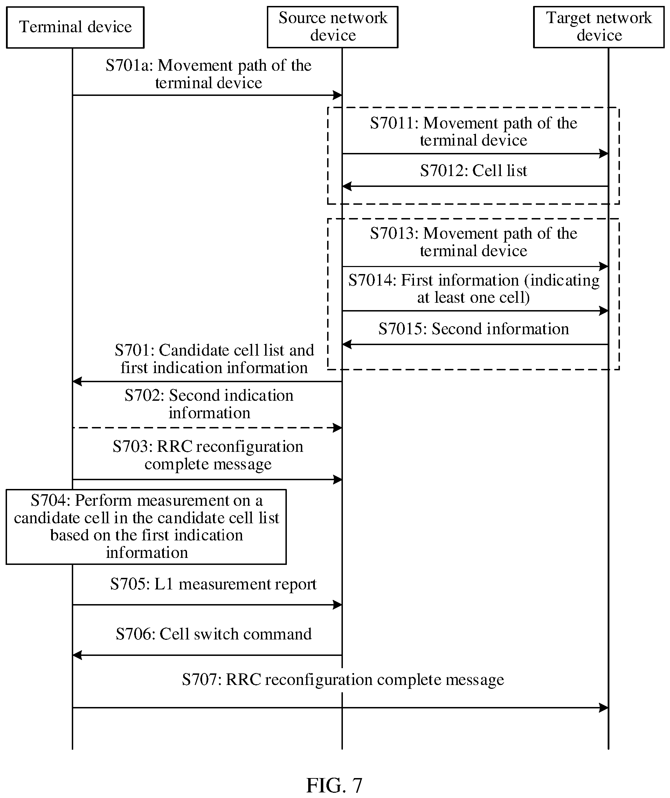

FIG. 7 is a schematic flowchart of a communication method according to an embodiment of this application. The method includes the following steps.

S701. Refer to S601. The first indication information uses any one of the first possible implementation to the third possible implementation.

In this embodiment of this application, the network device may configure different candidate cell lists and first ranges associated with the candidate cell lists for the terminal device. For example, the network device segments the movement path based on the movement path of the terminal device, and configures a plurality of candidate cell lists and first indication information corresponding to each candidate cell list. In this case, the terminal device moves to a corresponding location (or location range) or moment (or time range) based on the first indication information, to measure a candidate cell in the candidate cell list corresponding to the first indication information.

For example, before step S701, in S701a, the terminal device may send the movement path of the terminal device to the network device, and correspondingly, the network device receives the movement path of the terminal device, as shown in FIG. 7. Further, the network device may configure, for the terminal device based on the movement path, at least one candidate cell list and first indication information corresponding to (or associated with) each candidate cell list.

From a perspective of cell handover, the network device in S701a to S701 may be understood as a source network device. FIG. 7 is described from a perspective of cell handover. FIG. 7 relates to a terminal device, a source network device, and a target network device.

Optionally, the source network device may further indicate an occasion for deleting the configuration information of the candidate cell configured for the terminal device. Alternatively, it may be understood that the source network device indicates a trigger point or an execution point for performing a deletion operation on the configuration information of the configured candidate cell by the terminal device.

In some possible implementations, before step S701, S7011 may be further performed: The source network device may further send the movement path of the terminal device to a candidate network device (including the target network device). For example, the movement path of the terminal device may be carried in a handover request (HO request) message. S7012: The candidate network device may send a cell list to the source network device, where a cell included in the cell list is a cell through which the movement path of the terminal device passes. Further, the source network device may determine the candidate cell list and the first indication information based on the received cell list of the candidate target network device.

In some other possible implementations, before step S701, S7013 may be further performed: The source network device may further send the movement path of the terminal device to a candidate network device (including the target network device). S7014: The source network device sends first information to the candidate network device, where the first information indicates at least one cell, for example, the at least one cell belongs to the candidate network device. S7015: The candidate network device sends second information to the source network device, where the second information indicates whether the movement path of the terminal device passes through the at least one cell. Further, the source network device may determine the candidate cell list and the first indication information based on the received second information of the candidate target network device. In FIG. 7, for example, the candidate network device is a target network device. The movement path of the terminal device passes through the at least one cell, and the second information may be an HO ACK. The movement path of the terminal device does not pass through the at least one cell, and the second information may be an HO preparation failure (handover preparation failure).

S702: The source network device sends second indication information to the terminal device. In some embodiments, the source network device may include the second indication information and the first indication information in a same message and send the same message to the terminal device. In other words, S702 and S701 may be combined into one step. The source network device may separately include the second indication information and the first indication information in different messages and send the different messages to the terminal device. A sequence of S701 and S702 is not limited in this embodiment of this application.

The second indication information indicates a trigger point for deleting configuration information of at least one second candidate cell, and the second candidate cell is a candidate cell in the candidate cell list.

In a possible case, a quantity of the at least one second candidate cell may be a quantity of all candidate cells in the candidate cell list, that is, the at least one second candidate cell includes N second candidate cells, the candidate cell list also includes N candidate cells, and the N second candidate cells are the same as the N candidate cells in the candidate cell list. In this case, it may be understood that the second indication information indicates to delete configuration information of all candidate cells in the candidate cell list.

In another possible case, a quantity of the at least one second candidate cell is a quantity of all candidate cells in the candidate cell list that correspond to the first range. For example, the at least one second candidate cell includes N second candidate cells. The candidate cell list includes M candidate cells. M and N are both positive integers, and M is greater than N. A quantity of candidate cells in the first range that are measured by the terminal device is N. The N second candidate cells are the same as the N candidate cells in the candidate cell list that are in the first range. In this case, it may be understood that the second indication information indicates to delete configuration information of a candidate cell in the first range in the candidate cell list.

In some embodiments, the second indication information may further indicate a second range of candidate cells that need to be deleted. The second range may be indicated in a form of a list, may be indicated in a form of a set, or may be indicated in another manner. This is not limited in this embodiment of this application. The second range may be all candidate cells included in a candidate cell list on which measurement has been completed, or may be a part of candidate cells included in a candidate cell list on which measurement has been completed.

In a possible implementation, when the second indication information indicates a trigger point for deleting the configuration information of the at least one second candidate cell, a location may be used as the trigger point.

The location used as the trigger point may be a location point or a location range. A waypoint or a geographical location may be used as the location point.

For example, the trigger point is a first waypoint, and the second indication information indicates a first waypoint at which the configuration information of the at least one second candidate cell is deleted. To be specific, when arriving at the first waypoint, the terminal device deletes the configuration information of the at least one second candidate cell. For another example, the trigger point is a first geographical location, and the second indication information indicates a first geographical location at which the configuration information of the at least one second candidate cell is deleted. To be specific, when arriving at the first geographical location, the terminal device deletes the configuration information of the at least one second candidate cell.

For another example, the trigger point is a location range. The location range may be a range between two waypoints. A second waypoint and a third waypoint are used as an example. In this case, a location for deleting the configuration information of the at least one second candidate cell is a location between the second waypoint and the third waypoint. For another example, the location range is a range between two geographical locations. A second geographical location and a third geographical location are used as an example. In this case, a location for deleting the configuration information of the at least one second candidate cell is a location between the second geographical location and the third geographical location. For another example, the location range is a range between a geographical location and a waypoint. A fourth geographical location and a fourth waypoint are used as an example, where the fourth geographical location is a location whose distance from the fourth waypoint is less than a third distance threshold. In this case, a location for deleting the configuration information of the at least one second candidate cell is a location between the fourth geographical location and the fourth waypoint.

In another possible implementation, when the second indication information indicates a trigger point for deleting the configuration information of the at least one second candidate cell, a time may be used as the trigger point. The time used as the trigger point may be a moment or a time range. The time range may be represented by using two moments, or may be represented by using a moment and a time threshold.

In another possible implementation, when the second indication information indicates a trigger point for deleting the configuration information of the at least one second candidate cell, a time and a location point may be used as the trigger point. For example, the trigger point includes a moment 3, a moment 4, and a third location. A waypoint or a geographical location may be used as the third location. In this case, the second indication information indicates the terminal device to delete the configuration information of the at least one second candidate cell between the moment 3 and the moment 4 when the terminal device arrives at the third location. For another example, the trigger point includes a third location, a fourth location, and a moment 3. In this case, the second indication information indicates the terminal device to delete the configuration information of the at least one second candidate cell at the moment 3 when the terminal device arrives at a range between the third location and the fourth location.

It should be noted that the location or the time of the trigger point is a location or a time point at which measurement on the candidate cell in the candidate cell list is completed. For example, a flight path of the terminal device is Shanghai (10:00:00)-Suzhou (12:00:00)-Beijing (16:00:00). Two candidate cell lists and first indication information corresponding to each candidate cell list are configured for the terminal device. The two candidate cell lists respectively include a candidate cell list 1 and a candidate cell list 2. First indication information associated with the candidate cell list 1 indicates a path segment from Shanghai (10:00:00) to Suzhou (12:00:00). First indication information associated with the candidate cell list 2 indicates a path segment from Suzhou (12:00:00) to Beijing (16:00:00). In this case, a configured trigger point for deleting configuration information of a candidate cell included in the candidate cell list 1 may be a location or a time after the terminal device flies away from Suzhou.

In another possible implementation, the network device may indicate the terminal device to delete the configuration information of the configured candidate cell after handover is completed.

S703: The terminal device sends an RRC reconfiguration complete message to the source network device. After receiving the first indication information and/or the second indication information, the terminal device may store the first indication information and/or the second indication information.

S704: The terminal device performs measurement on a candidate cell in the candidate cell list based on the first indication information, where the measurement performed by the terminal device in this step may be L1 measurement.

S705: The terminal device sends an L1 measurement report to the source network device.

S706: The source network device sends a cell switch command (cell switch command) to the terminal device, to indicate the terminal device to perform handover to the target cell, where the target cell may be a cell in the candidate cell list.

Optionally, when sending second indication information to the terminal device, the source network device may also include the second indication information in the switch command. The step in which the source network device sends the second indication information to the terminal device may also be performed after the source network device sends the switch command to the terminal device.

S707: The terminal device performs handover to the target cell, and sends an RRC reconfiguration complete message to the target network device to which the target cell belongs.

In a possible implementation, when the network device sends the second indication information to the terminal device, after receiving the second indication information, the terminal device may perform a deletion operation on configuration information of all or a part of candidate cells in the candidate cell list based on the second indication information. Optionally, after performing the deletion operation, the terminal device may send third indication information to the source network device, where the third indication information indicates that configuration information of a part or all of cells in the candidate cell list has been deleted. In some possible implementations, the source network device may further send a deletion indication to a network device to which a cell whose configuration information has been deleted belongs, where the deletion indication indicates that one or more candidate cells managed by the network device have been deleted.

In another possible implementation, when the network device does not send the second indication information to the terminal device, the terminal device may determine, based on the movement path, whether to delete configuration information of all or a part of candidate cells in the candidate cell list. For example, after completing the handover to the target cell in the candidate cell list, the terminal device may determine, based on the movement path, whether the terminal device further passes through a candidate cell in the candidate cell list subsequently. If the terminal device passes through the candidate cell, the terminal device may store configuration information of the candidate cell. If the terminal device does not pass through the candidate cell, the terminal device may delete the configuration information of the candidate cell.

In a possible example, after the handover to the target cell is completed, when it is determined, based on the movement path of the terminal device, that a second path through which the terminal device passes after the terminal device flies away from a first path corresponding to the first range includes a part or all of candidate cells corresponding to the first range, configuration information of the part or all of the candidate cells in the candidate cell list that correspond to the first range may be retained. For example, the first path corresponding to the first range is a range before a waypoint 1 and a waypoint 2. If the terminal device further needs to pass through any waypoint between the waypoint 1 and the waypoint 2 after flying away from the range between the waypoint 1 and the waypoint 2, the terminal device may retain configuration information of a candidate cell that covers the range between the waypoint 1 and the waypoint 2, for example, may first store configuration information of a candidate cell in the candidate target cell list.

After the handover to the target cell is completed, when it is determined, based on the movement path of the terminal device, that a second path through which the terminal device passes after the terminal device flies away from a first path corresponding to the first range does not include a part or all of candidate cells corresponding to the first range, configuration information of the part or all of the candidate cells in the candidate cell list that correspond to the first range may be deleted.

In another possible example, after the handover to the target cell is completed, when it is determined, based on the movement path of the terminal device, that a second path through which the terminal device passes after the terminal device flies away from a first path corresponding to the first range includes a second range, and a shortest distance between the second range and the first range is less than or equal to a specified threshold, configuration information of a part or all of candidate cells in the candidate cell list that correspond to the first range continues to be stored. When it is determined, based on the movement path, that a second path through which the terminal device passes after the terminal device flies away from a first path corresponding to the first range includes a second range, and a shortest distance between the second range and the first range is greater than a specified threshold, configuration information of a part or all of candidate cells in the candidate cell list that correspond to the first range is deleted.

For example, the first path corresponding to the first range is a range before a waypoint 1 and a waypoint 2. If a distance before the waypoint 1 or the waypoint 2 and a waypoint through which the terminal device passes after the terminal device flies away from the range between the waypoint 1 and the waypoint 2 is less than or equal to a specified threshold, the terminal device may retain configuration information of a candidate cell that covers the range between the waypoint 1 and the waypoint 2, for example, may first store configuration information of a candidate cell in the candidate target cell list.

Optionally, after deleting the configuration information of the part or all of the candidate cells in the candidate target cell list, the terminal device may send third indication information to the source network device, where the third indication information indicates that a part or all of cells in the candidate cell list have been deleted. In some possible implementations, the source network device may further send a deletion indication to a network device to which a cell whose configuration information has been deleted belongs, where the deletion indication indicates that one or more candidate cells managed by the network device have been deleted. For example, the third indication information may be carried in an RRC reconfiguration complete message. For example, the third indication information may include an identifier, for example, an ID, of a cell whose configuration information has been deleted.

In a possible implementation, if the terminal device enters a second path from a first path corresponding to the first range, and has applied configuration information of a cell measured on the second path, the terminal device may clear a stored measurement result of the cell. Optionally, the terminal device may further end current measurement, for example, current measurement on a candidate cell list corresponding to the second path. In this case, the terminal device may end the measurement on the candidate cell list corresponding to the second path. In some embodiments, before clearing the stored measurement result of the cell, the terminal device may also report the measurement result to the source network device, and indicate a location (or a location range) or a time (or a time range) that corresponds to the measurement result to the source network device. For example, when reporting an L1 measurement result to the source network device, the terminal device may indicate a location (or a location range) or a time (or a time range) that corresponds to the L1 measurement result.

In a possible implementation, if the terminal device enters a second path from a first path corresponding to the first range, and has applied configuration information of a cell measured on the second path, the terminal device may store only a measurement result of an overlapping cell. The overlapping cell is a cell included in a candidate cell list corresponding to the first path and included in a candidate cell list corresponding to the second path. It may be understood that the overlapping cell is a same cell in the candidate cell list corresponding to the first path and the candidate cell list corresponding to the second path. Optionally, the terminal device may further continue current measurement, for example, current measurement on a candidate cell list corresponding to the second path. In this case, the terminal device may continue the measurement on the candidate cell list corresponding to the second path. In some embodiments, the terminal device may report, to the source network device, an L1 measurement result obtained through measurement, and indicate a location (or a location range) or a time (or a time range) that corresponds to the measurement result to the source network device. For example, when reporting an L1 measurement result to the source network device, the terminal device may indicate a location (or a location range) or a time (or a time range) that corresponds to the L1 measurement result.

In this embodiment of this application, the first indication information indicates a measurement range of the terminal device for the candidate cell list, so that the terminal device needs to measure only a cell in the measurement range, thereby reducing measurement overheads of the terminal device, and improving handover efficiency.

The following describes, in the second possible application scenario, the solutions provided in embodiments of this application. A take-off phase and a landing phase are used as an example.

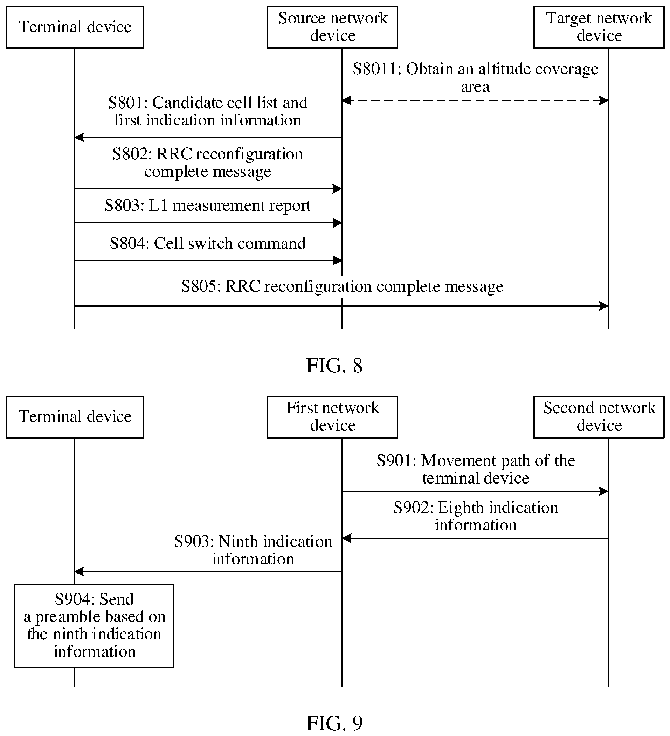

FIG. 8 is a schematic flowchart of a communication method according to an embodiment of this application. The method includes the following steps.

S801. Refer to S601. The first indication information uses any one of the fourth possible implementation and the fifth possible implementation.

In this embodiment of this application, the source network device may configure different candidate cell lists and first ranges associated with the candidate cell lists for the terminal device. The source network device may segment a flight altitude of the terminal device, and configure a plurality of candidate cell lists and first indication information corresponding to each candidate cell list. In this case, the terminal device moves to a corresponding altitude (or altitude range) based on the first indication information, to measure a candidate cell in the candidate cell list corresponding to the first indication information.

In some embodiments, the source network device may further send fourth indication information to the terminal device, where the fourth indication information indicates the terminal device to use same configuration information in an ascent phase and a descent phase. In some possible scenarios, if the terminal device is located at a same location in the ascent phase and the descent phase, the source network device may send the fourth indication information to the terminal device. For example, when sending the candidate cell list and the first indication information to the terminal device, the source network device may include the candidate cell list and the first indication information in first configuration information, and then send the first configuration information to the terminal device. If the terminal device is located at a same location in the ascent phase and the descent phase, the source network device may send the fourth indication information to the terminal device, to indicate the terminal device to use the first configuration information in both the ascent phase and the descent phase.

In some other embodiments, if the terminal device is located at different locations in the ascent phase and the descent phase, the source network device may send fifth indication information to the terminal device, where the fifth indication information indicates the terminal device to use different configuration information in the ascent phase and the descent phase. In some scenarios, the source network device may further send second configuration information to the terminal device, where the second configuration information includes sixth indication information and a second candidate cell list. For ease of differentiation, a candidate cell list in the first configuration information may be referred to as a first candidate cell list. Optionally, ranges indicated by the sixth indication information and the first indication information that are sent by the source network device each include an altitude range and a location (or a location range). The terminal device may determine, based on the location and the movement path, whether the first configuration information is used in the ascent phase or the descent phase, and whether the second configuration information is used in the descent phase or the ascent phase. For example, the source network device may include the first configuration information and the second configuration information in a same message and send the same message to the terminal device, or may include the first configuration information and the second configuration information in different messages and send the different messages to the terminal device.

In some possible scenarios, the source network device may alternatively use a direct indication manner. For example, the source network device sends seventh indication information to the terminal device, where the seventh indication information indicates use phases of the first configuration information and the second configuration information. The first configuration information is used in the ascent phase, and the second configuration information is used in the descent phase; or the first configuration information is used in the descent phase, and the second configuration information is used in the ascent phase. For example, the source network device may include the seventh indication information, the first configuration information, and the second configuration information in a same message and send the same message to the terminal device, or may include the seventh indication information, the first configuration information, and the second configuration information in different messages and send the different messages to the terminal device.

Optionally, before configuring the candidate cell list and the first indication information for the terminal device, the source network device may perform S8011 of obtaining an altitude coverage area (or an altitude coverage area and a location) of the candidate network device from the candidate network device (for example, a neighboring network device, including the target network device). For example, the source network device may send a handover request message to the neighboring network device, and obtain an altitude coverage area of the neighboring network device by using the handover request message, to determine the candidate cell list and the first indication information based on the altitude coverage area of each neighbor. In FIG. 8, for example, the candidate network device is a target network device.

In a possible implementation, before S801, the source network device may further send a movement path to the candidate network device (which may be a neighboring network device). The candidate network device may determine a list of cells that belong to the candidate network device and through which the movement path passes. At least one cell in the cell list is a cell through which the movement path passes. In some embodiments, the movement path may be a path through which the terminal device passes in the ascent phase and/or a path through which the terminal device passes in the descent phase. Further, the source network device may determine the candidate cell list and the first indication information based on the cell list of the candidate network device.

In some other possible implementations, before step S801, the source network device may further send the movement path of the terminal device to the candidate network devices (including the target network device). The source network device sends first information to the candidate network device, where the first information indicates at least one cell. The candidate network device sends second information to the source network device, where the second information indicates whether the movement path of the terminal device passes through the at least one cell. Further, the source network device may determine the candidate cell list and the first indication information based on the received second information of the candidate target network device.

Optionally, before configuring the candidate cell list and the first indication information for the terminal device, the source network device may further determine current location information of the terminal device, determine that the terminal device is currently in the ascent phase, or obtain ascent information of the terminal device, to configure the candidate cell list and the first indication information for the terminal device. In some embodiments, the terminal device may actively report a current flight location of the terminal device, or notify the source network device (that is, a network device that currently provides a service for the terminal device) after taking off.

S802: The terminal device sends an RRC configuration complete message to the source network device.

S803: The terminal device performs measurement on a candidate cell in the candidate cell list based on the first indication information, to obtain an L1 measurement report, and sends the L1 measurement report to the source network device.

S804: The source network device sends a cell switch command (cell Switch command) to the terminal device. For example, the cell switch command may carry a configuration information index of a target cell.

In a possible implementation, when the terminal device enters a second altitude range from a first altitude range in a flight process and applies configuration information of the target cell, the terminal device may clear a stored measurement result of the cell. Optionally, measurement on a candidate cell in a candidate cell list corresponding to the first altitude range may be stopped.

In another possible implementation, when the terminal device enters a second altitude range from a first altitude range in a flight process and applies configuration information of the target cell, the terminal device continues measurement on a candidate cell in a candidate cell list corresponding to the first altitude range. Optionally, when measurement on a cell in a candidate cell list corresponding to the second altitude range is completed and the L1 measurement result is sent to the source network device, it is indicated that the sent L1 measurement result corresponds to the second altitude range. The target cell is a cell in the candidate cell list corresponding to the first altitude range.

S805: After performing handover to the target cell, the terminal device sends an RRC reconfiguration complete message to a target network device to which the target cell belongs.

In some possible implementations, after the terminal device performs handover to the target cell in an ascent process, the terminal device may determine, based on a distance between an ascent location and a descent location, whether to delete configuration information of a candidate cell in a candidate cell list on which measurement has been performed in the ascent process. If the distance is short, the configuration information of the candidate cell may be stored for subsequent use, thereby eliminating a re-obtaining step and reducing a waste of resources.

In a possible example, after the handover to the target cell is completed in an ascent process, when it is determined that a distance between a location associated with a candidate cell list used in a descent process and a location associated with a candidate cell list to which the target cell belongs is greater than or equal to a specified distance threshold, configuration information of the candidate cell list to which the target cell belongs is deleted. For example, the terminal device may sequentially delete configuration information of candidate cells in a measurement sequence of the candidate cells in the candidate cell list. Alternatively, after completing the ascent phase, the terminal device may uniformly delete configuration information of candidate cells in the candidate cell list used in the ascent process. If it is determined that a distance between a location associated with a candidate cell list used in a descent process and a location associated with a candidate cell list to which the target cell belongs is less than a specified distance threshold, configuration information of the candidate cell list used in the ascent process may continue to be stored. In some scenarios, candidate cell lists corresponding to different altitude ranges are configured in the ascent phase. After completing measurement in the first altitude range and performing handover to the target cell in the candidate cell list corresponding to the first altitude range, if the terminal device determines that a distance between a location associated with the descent process and a location associated with the candidate cell list to which the target cell belongs is greater than or equal to a specified distance threshold, the terminal device may delete configuration information of the candidate cell list corresponding to the first altitude range. The terminal device may perform, based on an altitude range, a deletion operation on configuration information of candidate cells in altitude intervals.

In another possible example, after the handover to the target cell is completed in an ascent process, when it is determined that a location associated with a candidate cell list used in a descent process does not cover a location associated with a candidate cell list to which the target cell belongs, configuration information of the candidate cell list used in the ascent process is deleted. For example, the terminal device may sequentially delete configuration information of candidate cells in a measurement sequence of the candidate cells in the candidate cell list. Alternatively, after completing the ascent phase, the terminal device may uniformly delete configuration information of candidate cells in the candidate cell list used in the ascent process. If it is determined that a location associated with a candidate cell list used in the descent process covers a location associated with a candidate cell list to which the target cell belongs, configuration information of the candidate cell list used in the ascent process may continue to be retained.

Optionally, after deleting configuration information of a part or all of candidate cells in the candidate target cell list used in the ascent phase, the terminal device may send third indication information to the source network device, where the third indication information indicates that a part or all of cells in the candidate cell list have been deleted. In some possible implementations, the source network device may further send a deletion indication to a network device to which a cell whose configuration information has been deleted belongs, where the deletion indication indicates that one or more candidate cells managed by the network device have been deleted. For example, the third indication information may be carried in an RRC reconfiguration complete message. For example, the third indication information may include an identifier, for example, an ID, of a cell whose configuration information has been deleted. The deletion indication may include an identifier of a cell whose configuration information has been deleted.

In this embodiment of this application, the first indication information indicates an altitude measurement range of the terminal device for the candidate cell list, so that the terminal device needs to measure only a cell in the altitude measurement range, thereby reducing measurement overheads of the terminal device, and improving handover efficiency.

Currently, when the terminal device performs early random access, a time for sending a preamble affects accuracy of TA. Based on this, in this embodiment of this application, an occasion of sensing the preamble (a trigger point for sending the preamble) is determined based on the movement path of the terminal device.

FIG. 9 is a schematic flowchart of a communication method according to an embodiment of this application. The communication method includes the following steps.

S901: A first network device sends a movement path of a terminal device to a second network device, where the first network device is a network device that provides a service for the terminal device, and the second network device is a to-be-switched candidate target network device; and the movement path of the terminal device may be sent by the terminal device to the first network device.

For example, the first network device may include the movement path of the terminal device in a handover request (HO request) message, and send the HO request message to the second network device.

S902: The second network device sends eighth indication information to the first network device, where the eighth indication information indicates a trigger point (or an occasion) for sending a preamble by the terminal device.

For example, the second network device may include the eighth indication information in a handover request acknowledgment (HO request ACK) message, and send the HO request ACK message to the first network device.

For example, the second network device may determine, based on the movement path of the terminal device, a time and/or a location of passing through a coverage area of the second network device by the terminal device, to determine the trigger point for sending the preamble by the terminal device.

In a possible implementation, a location may be used as the trigger point. For example, the eighth indication information indicates a location for sending a preamble by the terminal device.

The location used as the trigger point may be a location point or a location range. A waypoint or a geographical location may be used as the location point. For example, a waypoint 2-1 is used as the trigger point. The eighth indication information indicates a waypoint at which the preamble is sent, and the eighth indication information may include the waypoint 2-1. When arriving at the waypoint 2-1, the terminal device may send the preamble to the source network device. For another example, a fifth geographical location is used as the trigger point. The eighth indication information indicates the fifth geographical location at which the terminal device sends the preamble. When arriving at the fifth geographical location, the terminal device may send the preamble to the source network device.

For another example, the trigger point is a location range. The location range may be a range between two waypoints. A fifth waypoint and a sixth waypoint are used as an example. In this case, the location for sending the preamble by the terminal device is a location between the fifth waypoint and the sixth waypoint. For another example, the location range may be a range between two geographical locations. A sixth geographical location and a seventh geographical location are used as an example. In this case, the location for sending the preamble by the terminal device is a location between the sixth geographical location and the seventh geographical location. For another example, the location range is represented by using a third location and a fourth distance threshold. In this case, the location for sending the preamble by the terminal device is a location whose distance from the third location is less than or equal to the fourth distance threshold.

In another possible implementation, a time may be used as the trigger point. For example, the eighth indication information indicates a time for sending the preamble by the terminal device. The time used as the trigger point may be a moment or a time range. The time range may be represented by using two moments, for example, a third moment and a fourth moment. The time range may also be represented by using a moment and a time threshold, for example, a fifth moment and a third time threshold.

In another possible implementation, a time and a location may be used as the trigger point. For example, the eighth indication information indicates a time and a location for sending the preamble by the terminal device. For example, the trigger point includes a moment 5, a moment 6, and a location 5. A waypoint or a geographical location may be used as the location 5. In this case, the eighth indication information indicates the terminal device to send the preamble between the moment 5 and the moment 6 when the terminal device arrives at the location 5. For another example, the trigger point includes a location 5, a location 6, and a moment 5. In this case, the eighth indication information indicates the terminal device to send the preamble at the moment 5 when the terminal device arrives at a range between the location 5 and the location 6.

S903: The first network device sends ninth indication information to the terminal device.

S904: The terminal device sends the preamble based on the ninth indication information.

In some possible embodiments, the ninth indication information may be the eighth indication information, and the terminal device sends the preamble based on the ninth indication information. For example, the terminal device determines, based on the ninth indication information, an occasion for sending the preamble, and then sends the preamble.

In some other possible embodiments, the ninth indication information is determined based on the eighth indication information. For example, the first network device may determine, based on the eighth indication information, an occasion for sending a physical downlink control channel (physical downlink control channel, PDCCH) order (order), and then send the PDCCH order to the terminal device. For example, the ninth indication information may be a PDCCH order, and the PDCCH order indicates the terminal device to send the preamble. Therefore, the terminal device sends the preamble.

In this embodiment of this application, the candidate network device determines, for the terminal device, the time or the location for sending the preamble, to improve TA accuracy.

The foregoing mainly describes, from a perspective of interaction between the terminal device and the network device (and between the network devices), the solutions provided in embodiments of this application. It may be understood that, to implement the foregoing functions, the terminal device and the network device may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

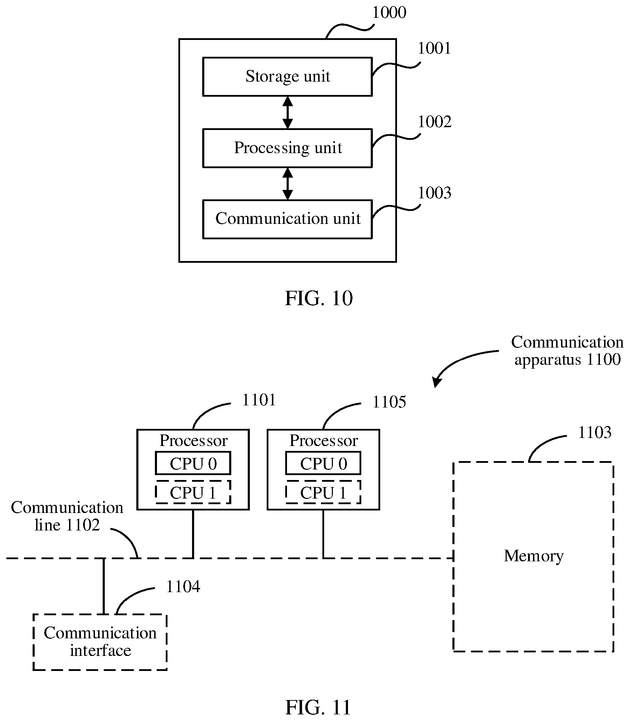

When an integrated unit is used, FIG. 10 is a possible example block diagram of an apparatus according to an embodiment of this application. As shown in FIG. 10, an apparatus 1000 may include a processing unit 1002 and a communication unit 1003. The processing unit 1002 is configured to: control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.
(1) The apparatus 1000 may be the terminal device in the foregoing embodiment. The processing unit 1002 may support the apparatus 1000 in performing actions of the terminal device in the foregoing method examples. Alternatively, the processing unit 1002 mainly performs an internal action of the terminal device in the method example, and the communication unit 1003 may support communication between the apparatus 1000 and another device.
   For example, in an embodiment, the communication unit 1003 is configured to receive a candidate cell list and first indication information from a first network device; and the processing unit 1002 is configured to perform measurement on a candidate cell in a first range.
(2) The apparatus 1000 may be the first network device (or the source network device) in the foregoing embodiment. The processing unit 1002 may support the apparatus 1000 in performing an action of the first network device (or the source network device) in the foregoing method examples. Alternatively, the processing unit 1002 mainly performs internal actions of the first network device (or the source network device) in the method example, and the communication unit 1003 may support communication between the apparatus 1000 and another device.

For example, in an embodiment, the processing unit 1002 is configured to determine a candidate cell list and first indication information. The communication unit 1003 is configured to send the candidate cell list and the first indication information to a terminal device.

For example, in another embodiment, the communication unit 1003 is configured to: send a movement path of the terminal device to a second network device, and receive eighth indication information sent by the second network device.

(3) The apparatus 1000 may be the second network device (or the candidate network device or the target network device) in the foregoing embodiment. The processing unit 1002 may support the apparatus 1000 in performing an action of the second network device (or the candidate network device or the target network device) in the foregoing method examples. Alternatively, the processing unit 1002 mainly performs an internal action of the second network device (or the candidate network device or the target network device) in the method example, and the communication unit 1003 may support communication between the apparatus 1000 and another device.

For example, in an embodiment, the communication unit 1003 is configured to: receive a movement path of a terminal device from a first network device, and send eighth indication information to the first network device.

It should be understood that division into units in the apparatus is merely logical function division. In an actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of these units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated together and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 11 is a diagram of a structure of a communication apparatus according to an embodiment of this application. The communication apparatus 1100 may be a circuit system of the terminal device in any one of the foregoing embodiments, and is configured to implement the method corresponding to the terminal device in the foregoing method embodiments. Alternatively, the communication apparatus 1100 may be a circuit system of the first network device (or the source network device) in any one of the foregoing embodiments, and is configured to implement the method corresponding to the first network device in the foregoing method embodiments. Alternatively, the communication apparatus 1100 may be a circuit system of the second network device (or the candidate network device or the target network device) in any one of the foregoing embodiments, and is configured to implement the method corresponding to the second network device (or the candidate network device or the target network device) in the foregoing method embodiments.

For a specific function, refer to the descriptions of the foregoing method embodiments. For example, a circuit system is a chip system.

The communication apparatus 1100 includes at least one processor 1101. The processor 1101 may be used for internal processing of the apparatus to implement a specific control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. The memory 1103, the communication line 1102, and the communication interface 1104 are all optional, and therefore are all represented by dashed lines in FIG. 11.

Optionally, the communication apparatus 1100 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 1100 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1102 may include a path, to transfer information between the foregoing components.

The communication interface 1104 is configured to communicate, by using any apparatus like a transceiver, with another device or a communication network, such as Ethernet, a radio access network (radio access network, RAN), a wireless local area network (wireless local area network, WLAN), or a wired access network.

The memory 1103 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, optical disk storage (including compressed optical discs, laser discs, optical discs, digital versatile optical discs, Blu-ray discs, and the like), magnetic disk storage medium or another magnetic storage device, or any other medium that can be used to carry or store desired program code in the form of instructions or data structures and can be accessed by a computer, but not limited thereto. The memory 1103 may exist independently, and is connected to the processor 1101 through the communication line 1102. Alternatively, the memory 1103 may be integrated with the processor 1101.

The memory 1103 is configured to store computer-executable instructions for performing the solutions of this application, and the processor 1101 controls execution. The processor 1101 is configured to execute the computer-executable instructions stored in the memory 1103, to implement the steps performed by the terminal device in any one of the foregoing embodiments, or implement the steps performed by the first network device (or the source network device) in any one of the foregoing embodiments, or implement the steps performed by the second network device (or the candidate network device or the target network device) in any one of the foregoing embodiments.

Optionally, the computer-executable instructions in embodiments of this application may also be referred to as application program code. This is not specifically limited in embodiments of this application.

In a specific implementation, in an embodiment, the processor 1101 may include one or more CPUs, for example, a CPU 0 and a CPU 1 in FIG. 11.

In a specific implementation, in an embodiment, the communication apparatus 1100 may include a plurality of processors such as the processor 1101 and a processor 1105 in FIG. 11. Each of the processors may be a single-core (single-CPU) processor or a multi-core (multi-CPU) processor. The processor herein may be one or more devices, circuits, and/or processing cores configured to process data (for example, computer program instructions).

When the apparatus shown in FIG. 11 is a chip, for example, a chip of the terminal device, a chip of the first network device (or the source network device), or the second network device (or the candidate network device or the target network device), the chip includes a processor 1101 (which may further include a processor 1105), a communication line 1102, and a communication interface 1104. Optionally, the chip may include a memory 1103. Specifically, the communication interface 1104 may be an input interface, a pin, a circuit, or the like. The memory 1103 may be a register, a cache, or the like. The processor 1101 and the processor 1105 each may be a general-purpose CPU, a microprocessor, an ASIC, or one or more integrated circuits configured to control program execution of the communication method in any one of the foregoing embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a terminal device and comprising:
receiving a candidate cell list and first indication information from a first network device, wherein the first indication information indicates a first range, and the first range is a range within which measurement is performed on a candidate cell in the candidate cell list; and
performing measurement on a candidate cell in the first range.

2. The method according to claim 1, wherein that the first indication information indicates the first range comprises:
the first indication information indicates a start location and an end location that correspond to the first range; or
the first indication information indicates a start location corresponding to the first range.

3. The method according to claim 2, wherein the start location is:
a waypoint at which the terminal device starts the measurement;
a geographical location at which the terminal device starts the measurement; or
a location whose distance from a first location is less than or equal to a first distance threshold.

4. The method according to claim 2 or 3, wherein the end location is:
a waypoint at which the terminal device ends the measurement;
a geographical location at which the terminal device ends the measurement; or
a location whose distance from a second location is greater than or equal to a second distance threshold.

5. The method according to any one of claims 1 to 4, wherein that the first indication information indicates the first range comprises:
the first indication information indicates a start time and an end time that correspond to the first range; or
the first indication information indicates a start time corresponding to the first range.

6. The method according to claim 5, wherein the start time is:
a moment at which the terminal device starts the measurement; or
a moment whose time difference from a first moment is less than or equal to a first time threshold.

7. The method according to claim 5 or 6, wherein the end time is:
a moment at which the terminal device ends the measurement; or
a moment whose time difference from a second moment is greater than or equal to a second time threshold.

8. The method according to any one of claims 1 to 7, wherein the method further comprises:
receiving second indication information from the first network device, wherein the second indication information indicates a trigger point for deleting configuration information of at least one second candidate cell, and the second candidate cell is a candidate cell in the candidate cell list.

9. The method according to claim 8, wherein that the second indication information indicates the trigger point for deleting the configuration information of the at least one second candidate cell comprises:
the second indication information indicates a location for deleting the configuration information of the at least one second candidate cell; or
the second indication information indicates a time for deleting the configuration information of the at least one second candidate cell.

10. The method according to claim 9, wherein the location for deleting the configuration information of the at least one second candidate cell is:
a first waypoint at which the configuration information of the at least one second candidate cell is deleted;
a first geographical location at which the configuration information of the at least one second candidate cell is deleted;
a location between a second waypoint and a third waypoint;
a location between a second geographical location and a third geographical location; or
a location between a fourth geographical location and a fourth waypoint, wherein the fourth geographical location is a location whose distance from the fourth waypoint is less than a third distance threshold.

11. The method according to claim 9, wherein that the second indication information indicates the trigger point for deleting the configuration information of the at least one second candidate cell comprises:
the second indication information indicates a time range for deleting the configuration information of the at least one second candidate cell; or
the second indication information indicates a moment for deleting the configuration information of the at least one second candidate cell.

12. The method according to any one of claims 1 to 4, wherein that the first indication information indicates the first range comprises:
the first indication information indicates a start altitude and an end altitude that correspond to the first range;
the first indication information indicates an end altitude corresponding to the first range; or
the first indication information indicates a start altitude corresponding to the first range.

13. The method according to claim 12, wherein the receiving the candidate cell list and the first indication information from the first network device comprises:
receiving first configuration information from the first network device, wherein the first configuration information comprises the candidate cell list and the first indication information.

14. A communication method, applied to a second network device and comprising:
determining a candidate cell list and first indication information; and
sending the candidate cell list and the first indication information to a terminal device, wherein the first indication information indicates a first range, and the first range is a range within which measurement is performed on a candidate cell in the candidate cell list.

15. The method according to claim 14, wherein that the first indication information indicates the first range comprises:
the first indication information indicates a start location and an end location that correspond to the first range; or
the first indication information indicates a start location corresponding to the first range.

16. The method according to claim 15, wherein the start location is:
a waypoint at which the terminal device starts the measurement;
a geographical location at which the terminal device starts the measurement; or
a location whose distance from a first location is less than or equal to a first distance threshold.

17. The method according to claim 14 or 15, wherein the end location is:
a waypoint at which the terminal device ends the measurement;
a geographical location at which the terminal device ends the measurement; or
a location whose distance from a second location is greater than or equal to a second distance threshold.

18. The method according to any one of claims 14 to 17, wherein that the first indication information indicates the first range comprises:
the first indication information indicates a start time and an end time that correspond to the first range; or
the first indication information indicates a start time corresponding to the first range.

19. The method according to claim 18, wherein the start time is:
a moment at which the terminal device starts the measurement; or
a moment whose time difference from a first moment is less than or equal to a first time threshold.

20. The method according to claim 18 or 19, wherein the end time is:
a moment at which the terminal device ends the measurement; or
a moment whose time difference from a second moment is greater than or equal to a second time threshold.

21. The method according to any one of claims 14 to 20, wherein the method further comprises:
sending second indication information to the terminal device, wherein the second indication information indicates a trigger point for deleting configuration information of at least one second candidate cell, and the second candidate cell is a candidate cell in the candidate cell list.

22. The method according to claim 21, wherein that the second indication information indicates the trigger point for deleting the configuration information of the at least one second candidate cell comprises:
the second indication information indicates a location for deleting the configuration information of the at least one second candidate cell; or
the second indication information indicates a time for deleting the configuration information of the at least one second candidate cell.

23. The method according to claim 22, wherein the location for deleting the configuration information of the at least one second candidate cell is:
a first waypoint at which the configuration information of the at least one second candidate cell is deleted;
a first geographical location at which the configuration information of the at least one second candidate cell is deleted;
a location between a second waypoint and a third waypoint;
a location between a second geographical location and a third geographical location; or
a location between a fourth geographical location and a fourth waypoint, wherein the fourth geographical location is a location whose distance from the first waypoint is less than a third distance threshold.

24. The method according to claim 22, wherein that the second indication information indicates the trigger point for deleting the configuration information of the at least one second candidate cell comprises:
the second indication information indicates a time range for deleting the configuration information of the at least one second candidate cell; or
the second indication information indicates a moment for deleting the configuration information of the at least one second candidate cell.

25. The method according to any one of claims 14 to 17, wherein that the first indication information indicates the first range comprises:
the first indication information indicates a start altitude and an end altitude that correspond to the first range;
the first indication information indicates an end altitude corresponding to the first range; or
the first indication information indicates a start altitude corresponding to the first range.

26. The method according to any one of claims 14 to 25, wherein the method further comprises:
sending a movement path of the terminal device to the second network device; and
receiving a cell list from the second network device, wherein the cell list comprises an identifier of at least one cell through which the movement path passes.

27. The method according to any one of claims 14 to 25, wherein the method further comprises:
sending a movement path of the terminal device to the second network device;
sending first information to the second network device, wherein the first information indicates at least one cell; and
receive second information from the second network device, wherein the second information indicates whether the movement path passes through the at least one cell.

28. A communication apparatus, comprising a processor and a memory, wherein the processor is coupled to the memory, and the processor is configured to implement the method according to any one of claims 1 to 13, or configured to implement the method according to any one of claims 14 to 27.

29. A computer-readable storage medium, wherein the computer-readable storage medium stores instructions, and the instructions are run on a computer, so that the computer performs the method according to any one of claims 1 to 13 or the method according to any one of claims 14 to 27.

30. A computer program product, comprising a computer program or instructions, wherein when the computer program or the instructions are run by an apparatus, the method according to any one of claims 1 to 13 or the method according to any one of claims 14 to 27 is performed.
